# EUROPÄISCHE PATENTANMELDUNG

(11) **EP 0 791 412 A1**
(43) Veröffentlichungstag der Anmeldung: **27.08.1997**
(21) Anmeldenummer: 97810076.6
(22) Anmeldetag: 12.02.1997
(51) Int. Cl.: B21C 23/24

(54) **Verbundprofil aus zwei unterschiedlichen Metallen, insbesondere zum Einsatz als Stromschiene, sowie Verfahren zu dessen Herstellung**

(30) Priorität: 26.02.1996 DE 19607221
(71) Anmelder: Alusuisse Technology & Management AG, 8212 Neuhausen am Rheinfall (CH)
(72) Erfinder: Glück, Joachim, 78713 Schramberg-Sulgen (DE); Kidratschky, Hermann, 78247 Hilzingen (DE)

(57) **Zusammenfassung**

Bei einem Verbundprofil mit einem Tragkörper aus einem Leichtmetallwerkstoff als Profilkomponente und wenigstens einem mit diesem während eines Strangpreßvorganges metallisch verbundenen Profilband aus einem anderen Metall hoher Abriebfestigkeit -- insbesondere zum Einsatz als Stromschiene -- mit einer vom Profilband bestimmten Schleifebene, ist zumindest ein Profilband (20) in dem Verbundprofil etwa rechtwinkelig oder geneigt zur Schleifebene (E) in den Leichtmetallwerkstoff eingebettet ist. Beidseits der Längsachse (A) des Verbundprofils (30) und in Abstand (n) zu ihr verläuft jeweils ein Profilband (20).

## Beschreibung

Die Erfindung betrifft ein Verbundprofil mit einem Tragkörper aus einem Leichtmetallwerkstoff als Profilkomponente und wenigstens einem mit diesem während eines Strangpreßvorganges metallisch verbundenen Profilband aus einem anderen Metall höherer Abriebfestigkeit, insbesondere zum Einsatz als Stromschiene mit einer vom Profilband bestimmten Schleifebene. Zudem erfaßt die Erfindung ein Verfahren zur Herstellung eines solchen Verbundprofils aus zwei Profilkomponenten.

Der DE-B 24 32 541 ist ein Verfahren zum Herstellen von Stromschienen aus einem Trägerprofil und mindestens einer wenigstens einen Teil der Oberfläche des Trägerprofils bildenden Auflage aus Profilband eines anderen Metalls zu entnehmen. Während eines Strangpreßvorganges wird das Trägerprofil durch Auspressen eines Blockes durch den Formgebungsquerschnitt einer Matrize erzeugt, und gleichzeitig durchläuft das Profilband zur Matrizenlängsachse parallel den Matrizendurchbruch oder Formgebungsquerschnitt. Zur Lösung der Aufgabe, eine ausreichende Verbindung zwischen Trägerprofil und Profilband auch bei Verwendung nicht vorplattierter Bänder zu gewährleisten und zudem ein besonders wirtschaftliches Herstellen zu ermöglichen, werden nach der Vorerfindung mindestens zwei Verbundprofile gleichzeitig erzeugt, wobei die mit den Auflagen zu versehenden Bereiche der Trägerprofile einander gegenüberstehen und zwischen diesen Profilbänder paarweise aufeinanderliegend durch den Formgebungsquerschnitt geführt werden.

Es sind nach diesem Verfahren inzwischen viele Profilformen hergestellt worden. Sofern kein ausreichender Formschluß zwischen Aluminiumgrundprofil und Profilband besteht, ist - - beispielsweise zu Scherversuchen zu beiden Materialien -- zusätzlich der Nachweis eines ausreichenden Kraftschlusses zu erbringen. Darüber hinaus führen die bekannten Verfahren insbesondere zu Profilen, deren Abriebfestigkeit durch ein dünnes, zur beschliffenen Profilfläche parallel liegendes Stahlband bestimmt wird. Die Dicke des verarbeitbaren Stahlbandes -- und damit der maximalen Abriebdicke -- liegt nach dem Stande der Technik -- derzeit bei höchstens 6 mm.

In Kenntnis dieses Standes der Technik hat sich der Erfinder das Ziel gesetzt, die Verbindung zwischen Trägerprofil und Profilband -- auch bei nicht vorplattierten Profilbändern -- unter Beibehaltung der besonderen wirtschaftlichen Herstellungsmöglichkeiten weitergehend zu verbessern; es soll eine Reduzierung bzw. Vermeidung des bestehenden Produktions- und Prüfaufwandes ebenso erreicht werden wie eine Erhöhung der Abriebstandzeit, d.h. der zu erwartenden Lebensdauer des Produktes.

Zur Lösung dieser Aufgabe führt die Lehre der unabhängigen Patentansprüche; die Unteransprüche geben günstige Weiterbildungen an.

Erfindungsgemäß ist zumindest ein Profilband in dem Verbundprofil etwa rechtwinkelig oder geneigt zur Schleifebene in den Leichtmetallwerkstoff eingebettet, das bevorzugt zumindest an seinen Hauptflächen mit Ausnehmungen, Durchsetzungen, Riefen, Nuten oder ähnlichen Einformungen zur Verbesserung des Formschlusses ausgestattet sein soll.

Besonders zwei Ausgestaltungen haben sich als günstig erwiesen, nämlich zum einen die Anordnung eines Profilbandes in der Längsachse des Verbundprofils, wobei eine Schmalseite dieses Profilbandes die Schleifebene definiert, sowie zum anderen ein Verbundprofil mit beidseits der Längsachse und in Abstand zu ihr angeordneten Profilbändern.

Im Rahmen der Erfindung werden hier also die Profilbänder aus beispielsweise Kupfer- oder Eisenwerkstoffen, insbesondere aus Stahl, an ihren beiden Breitseiten und einer Schmalkante mit der Aluminiummatrix in Kontakt gebracht, was zu wesentlich größeren Verbundflächen für den metallischen Verbund führt sowie zu höheren Reibungen zwischen beiden Werkstoffen.

Erfindungsgemäß liegen allseits vom Leichtmetallwerkstoff umgebene Profilbänder, bei denen die der Schleifebene zuzuordnende Schmalkante von einer dünnen Leichtmetallschicht überzogen ist; diese schont die Wände des Matrizendurchbruches, indem sie deren unmittelbaren Kontakt mit dem/den Profilband/Profilbändern hintanhält.

Nach einem anderen Merkmal der Erfindung verläuft zumindest an einer Flanke der Schmalkante eine pultartig geneigte Seitenfläche als Begrenzung eines das Profilband enthaltenden Schienenkopfes der Leichtmetallkomponente.

Beim Herstellen solcher Verbundprofile aus zumindest zwei Profilkomponenten mittels Strangpressens durch einen Matrizendurchbruch unter Einführen zumindest einer der oben näher erörterten bandartigen Profilkomponenten in den Preßstrom der Leichtmetallmatrix wird die bandartige Profilkomponente parallel oder geneigt zur Längsachse des Matrizendurchbruches in die Leichtmetallmatrix eingeführt und dabei in diese mit den beiden Breitseiten sowie zumindest einer Schmalkante eingebettet, wobei die Profilkomponenten kraft- und formschlüssig verbunden werden.

Beim gleichzeitigen Verpressen zweier Verbundprofile mit zueinander weisenden Schleifflächen -- nach der Offenbarung der DE-B-24 32 541 -- wird erfindungsgemäß zwischen zwei parallel in die Leichtmetallmatrix eingeführten bandartigen Profilkomponenten eine Profilhohlkammer ausgeformt, deren Kontur von den pultartig geneigten Seitenflächen der Verbundprofile gebildet und die von der Schleifebene gekreuzt wird; diese beiden Verbundprofile können anschließend an der Schleifebene unter Einführen eines Trennwerkzeuges in die Profilhohlkammer getrennt werden.

Mit den beschriebenen Maßgaben wird die vorgegebene Aufgabe ohne weiteres gelöst. Zudem werden die folgenden Vorteile erreicht:
- Vereinfachung der Preßwerkzeuge und Erhöhung der Pressgeschwindigkeit;
- Reduzierung von Entwicklungskosten bei Neuprofilen durch formschlüssigen Verbund und neuer Profilgestaltung;
- Herstellung von kleinquerschnittigen Verbundprofilen bisher nicht erreichbarer Abriebfestigkeit;
- Vermeidung der Verbundprüfung durch formschlüssiges Verpressen des Profilbandes mittels der Nuten, Ausnehmungen, Durchsetzungen in dem sonst flachen Bandprofil;
- Erhöhung der Preßgeschwindigkeit ohne das Entstehen eines metallischen Verbundes berücksichtigen zu müssen;
- Erhöhung der Abriebdicke des Profilkopfes auf bevorzugt 15 bis 25 mm - entsprechend der Verankerung bzw. Profilbandhöhe im Aluminiumgrundprofil.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1, 3:: Querschnitte durch jeweils ein Verbundprofil;
- Fig. 2:: eine Schrägsicht auf zwei miteinander auf dem Wege des Strangpressens gleichzeitig erzeugte Verbundprofile mit zu] geordnetem Trennwerkzeug;
- Fig. 4:: den Querschnitt durch zwei andere miteinander erzeugte Verbundprofile.

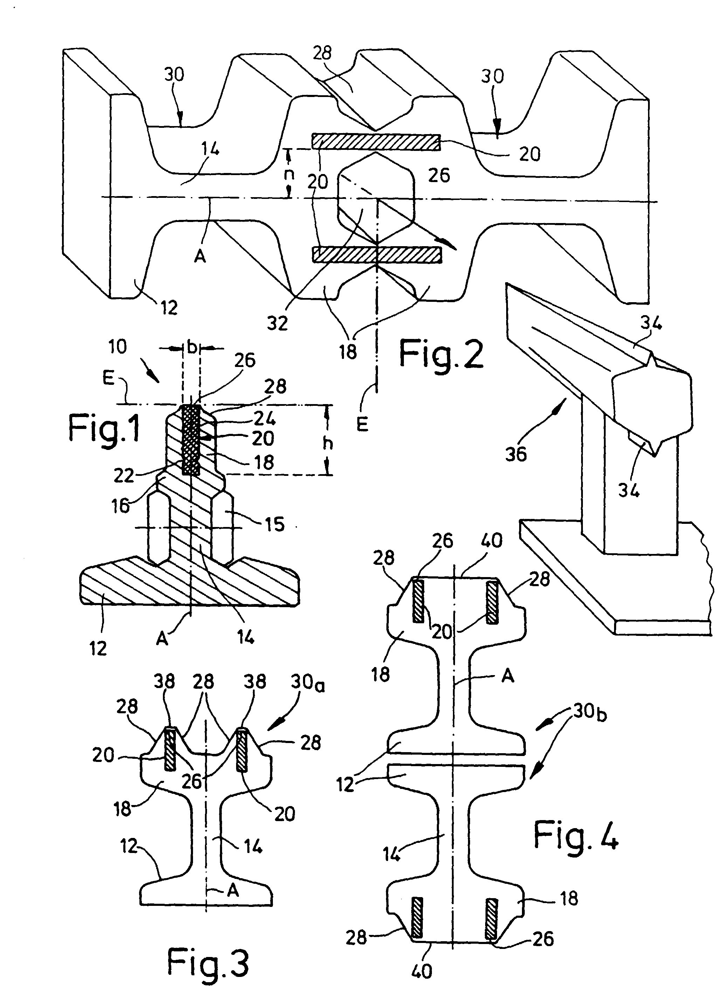

Ein als Stromschiene einsetzbares Verbundprofil 10 weist nach Fig. 1 einen auf dem Wege des Strangpressens aus einer Aluminiumlegierung entstandenen Schienenkörper mit horizontalem Schienenfuß 12 und diesen zu einem "T" ergänzenden Schienenhals 14 auf, den oberhalb eines wulstartigen Kragens 16 ein Schienenkopf 18 fortsetzt. In diesen ist in Querschnittslängsachse A ein flaches rechteckiges Bandprofil 20 eingebettet, das -- zur Herstellung eines Formschlusses mit der Matrix des Schienenkopfes 18 -- mit Durchsetzungen, Ausnehmungen, Nuten 22 od.dgl. Einformungen oder mit einer Riffelung, Rändelung od.dgl. Oberflächenstrukturierung ausgestattet ist.

Die Dicke b des Bandprofils 20 mißt bevorzugt etwa 5 mm, seine Querschnittshöhe h bzw. die Länge seiner Breitseiten 24 hier 15 bis 25 mm; diese entspricht dem für solche Schienentypen bekannten Abriebmaß. Der Schienenkopf 18 bietet beidseits der in einer Schleifebene E für einen nicht dargestellten Stromabnehmer an seiner Oberfläche verlaufenden Schmalkante 26 als Schleiffläche des Bandprofils 20 pultartig abfallende Seitenflächen 28 an. Im übrigen sind am Schienenhals 14 Verbindungslaschen 15 zum Anschluß an ein fluchtendes Schienenprofil angeschraubt.

Fig. 2 verdeutlicht das gleichzeitige Herstellen zweier Verbundprofile 30 durch einen gemeinsamen Durchbruch eines nicht erkennbaren Preßwerkzeuges. Dabei liegen die Schleifflächen 26 zweier parallel sowie in Abstand n zur Symmetrie- oder Querschnittsachse A im Schienenkopf 18 des einen Verbundprofils 30 verlaufenden Bandprofile 20 den Schleifflächen 26 fluchtender Bandprofile 20 des anderen Verbundprofils 30 an. Die zu Fig. 1 beschriebenen, das Bandprofil 20 flankierenden Seitenflächen 28 des Schienenkopfes 18 bilden in Fig. 2 an der Querschnittsachse A eine zeitweilige Profilhohlkammer 32.

Nach dem Abkühlen des so entstehenden Preßstranges werden die beiden Verbundprofile 30 mittels Schneiden 34 eines bei 36 skizzierten, dafür zur Profilhohlkammer 32 geführten Trenndornes gespalten. Das Trennen kann auch nach dem Einführen einer Zugstange in die Profilhohlkammer 32 mittels eines Ziehdornes erfolgen.

Das Verbundprofil 30ₐ der Fig. 3 ist ohne Partner -- also als Einzelprofil -- entstanden, seine beiden Schleifflächen 26 sind zur Schonung des Werkzeuges von einem Matrixhut 38 überdeckt. Gleiches trifft für die Verbundprofile 30_{b} der Fig. 4 zu, die ohne Profilhohlkammer entstehen, und eine die Schleifflächen 26 ihrer Bandprofile 20 überlagernde ebene Firstschicht 40 anbieten.

## Patentansprüche

1. Verbundprofil mit einem Tragkörper aus einem Leichtmetallwerkstoff als Profilkomponente und wenigstens einem mit diesem während eines Strangpreßvorganges metallisch verbundenen Profilband aus einem anderen Metall hoher Abriebfestigkeit, insbesondere zum Einsatz als Stromschiene mit einer vom Profilband bestimmten Schleifebene,
dadurch gekennzeichnet,
daß zumindest ein Profilband (20) in dem Verbundprofil (10, 30, 30ₐ, 30_{b}) etwa rechtwinkelig oder geneigt zur Schleifebene (E) in den Leichtmetallwerkstoff eingebettet ist.

2. Verbundprofil nach Anspruch 1, dadurch gekennzeichnet, daß ein Profilband (20) in der Längsachse (A) des Verbundprofils (10) verläuft und eine Schmalkante (26) des Profilbandes als Schleiffläche die Schleifebene (E) berührt.

3. Verbundprofil nach Anspruch 1, dadurch gekennzeichnet, daß beidseits der Längsachse (A) des Verbundprofils (30) und in Abstand (n) zu ihr jeweils ein Profilband (20) verläuft.

4. Verbundprofil nach Anspruch 2, dadurch gekennzeichnet, daß jeweils eine Schmalkante (26) der beiden Profilbänder (20) als Schleiffläche die Schleifebene (E) berührt.

5. Verbundprofil nach Anspruch 1 oder 2, dadurch gekennzeichnet, daß das/die Profilband/Profilbänder (20) allseitig in den Leichtmetallwerkstoff eingebettet ist/sind, wobei die der Schleifebene (E) zuzuordnende Schmalkante (26) von einer dünnen Leichtmetallschicht (38, 40) überzogen ist.

6. Verbundprofil nach einem der Ansprüche 1 bis 5, dadurch gekennzeichnet, daß das Profilband (20) mit Ausnehmungen, Durchsetzungen, Nuten od.dgl. Einformungen (22) versehen ist.

7. Verbundprofil nach einem der Ansprüche 1 bis 6, dadurch gekennzeichnet, daß das Profilband (20) zumindest an seinen Breitseiten (24) mit Retentionen wie Rändelungen oder Riffelungen versehen ist.

8. Verbundprofil nach wenigstens einem der Ansprüche 1 bis 7, gekennzeichnet durch eine zumindest an einer Flanke der Schmalkante (26) verlaufende pultartig geneigte Seitenfläche (28) eines das Profilband (20) enthaltenden Schienenkopfes (18) der Leichtmetallkomponente.

9. Verfahren zum Herstellen eines Verbundprofils aus zumindest zwei Profilkomponenten mittels Strangpressens durch einen Matrizendurchbruch unter Einführen zumindest einer bandartigen Profilkomponente in den Preßstrom der Matrix, bevorzugt einer Leichtmetallmatrix, unter Erzeugung einer Verbindung zwischen den Profilkomponenten, insbesondere zum Herstellen von Verbundprofilen nach wenigstens einem der voraufgehenden Patentansprüche, dadurch gekennzeichnet, daß die bandartige/n Profilkomponente/n parallel oder geneigt zur Längsachse des Matrizendurchbruches in die Leichtmetallmatrix eingeführt und dabei in diese mit den beiden Breitseiten sowie zumindest einer Schmalkante eingebettet wird/werden, wobei die Profilkomponenten kraft- und formschlüssig verbunden werden.

10. Verfahren, bei dem wenigstens zwei Verbundprofile mit zueinander weisenden Schleifflächen gleichzeitig stranggepreßt werden, nach Anspruch 9, dadurch gekennzeichnet, daß zwischen zwei parallel in die Leichtmetallmatrix eingeführten bandartigen Profilkomponenten eine Profilhohlkammer ausgeformt wird, deren Kontur von pultartig geneigten Seitenflächen der Verbundprofile gebildet und die von der Schleifebene gekreuzt wird.

11. Verfahren nach Anspruch 10, dadurch gekennzeichnet, daß die Verbundprofile an der Schleifebene unter Einführen eines Trennwerkzeuges in die Profilhohlkammer getrennt werden.

12. Verfahren nach Anspruch 9, dadurch gekennzeichnet, daß während des Strangpressens die bandartige/n Profilkomponente/n allseitig in den Leichtmetallpartner eingebettet wird/werden und anschließend die auf der/den Schleiffläche/n ausgeformte Leichtmetallschicht entfernt wird.
